# EUROPEAN PATENT APPLICATION

(11) **EP 1 465 420 A2**
(43) Date of publication of application: **06.10.2004**
(21) Application number: 04075911.0
(22) Date of filing: 22.03.2004
(51) Int. Cl.: H04N 5/77

(54) **Compact wireless storage**

(30) Priority: 03.04.2003 US 407021
(71) Applicant: EASTMAN KODAK COMPANY, Rochester, New York 14650 (US)
(72) Inventor: Marshall, Christopher I. c/o Eastman Kodak Company, Rochester New York 14650-2201 (US)
(74) Representative: Haile, Helen Cynthia

(57) **Abstract**

A removable wireless storage module (100) comprising: a digital memory (120) for storing digital data; a radio antenna (160); radio interface electronics (140) coupled to the antenna (160) and the digital memory (120); a web server (150); and host interface electronics (130) for coupling the digital memory (120) to a digital host device which can supply electrical power to the module (100) and which can produce digital data which can be stored in the digital memory (120); wherein the digital memory (120) is also accessible by radio wireless device independently of the digital host device, by means of the radio antenna (160) and the radio interface electronics (140).

## Description

This invention relates in general to digital devices, such as digital cameras, that have removable digital storage and more particularly to digital devices having removable digital storage that is available via a wireless network to other devices.

Current digital cameras typically have two ways to get images off the camera. The first way is via removable, digital storage media and the second way is via a wired connection, such as USB (Universal Serial Bus), Firewire, or serial (RS-232).

Many cameras use the PCMCIA standards based Compact Flash format for removable digital storage media. The Compact Flash trademark and specification were transferred to the Compact Flash Association, by Sandisk, providing a royalty free license to companies that develop products. These Compact Flash cards contain flash memory of various sizes up to 1Gbyte, or higher. The Intel StrataFlash products are examples of high density flash memory. They typically use 3.3 or 5 volt power.

These Compact Flash cards can be plugged into digital cameras, PDA's (Personal Digital Assistant), laptop computers, portable music players, and readers connected to desktop computers. This allows the storage and transfer of digital data in a compact form factor. Other variations of Compact Flash that have emerged from other vendors include; Memory Stick, Secure Digital, Multimedia Card, Smart Media, and xD Picture Card.

There are also Compact Flash format wireless network cards. These wireless network cards provide a PDA or other portable device connectivity to a standard network via an access point or directly to another device with a wireless network card. The Symbol Spectrum24 Wireless Networker is an example of an IEEE 802.11b wireless LAN card. The Intersil Prism chips are an example of a line of wireless networking chips. There are also Secure Digital format based Bluetooth radios that can be plugged into PDA and other devices. The Toshiba Pocket PC Bluetooth SD Card is an example of such a card.

Sandisk has recently announced the Connect dual function Compact Flash card that provides both storage and wireless networking in a single card. The Connect product uses the PCMCIA multifunction capability to provide interfaces to both devices from the host. Separate drivers need to be provided on the host to utilize both functions. In addition, the two functions are independently resident on the card and are not operationally linked to each other.

Many devices can now be configured via a network interface. Printers, Access Points and other devices can be accessed via a standard Internet browser such as Internet Explorer. The browser interface allows the device to be configured and monitored.

One disadvantage to these devices is that the digital storage media must be removed from the digital device, such as a camera, in order to access the images, or the camera must be connected to a computer making it unable to be used for taking pictures. The current multifunction solution provided by the Connect Compact Flash card requires that the camera control both the memory and wireless interface.

There is thus a need for a simpler solution to these problems.

According to the present invention, there is provided a solution to these problems.

According to a feature of the present invention, there is provided a removable wireless storage module comprising: a digital memory for storing digital data; radio antenna; a radio interface electronics coupled to said antenna and said digital memory; a web server; and host interface electronics for coupling said digital memory to a digital host device which can supply electrical power to said module and which can produce digital data which can be stored in said digital memory; wherein said digital memory is also accessible by radio wireless device independently of said digital host device, by means of said radio antenna and said radio interface electronics.

The invention has the following advantages.
1. By incorporating the wireless interface into the storage card the camera or other digital device is only concerned with writing images to the card simplifying its operation.
2. The storage card of the invention can also be used in different cameras, and other devices, allowing the user to move the capability from one device to another.
3. The images are immediately available to other devices via the wireless network.

Fig. 1 is a block diagram of a digital camera and its main components.
Fig. 2 is a block diagram of the components of a personal computer.
Fig. 3 is a block diagram of an embodiment of the present invention.
Fig. 4 is a diagrammatic view of the web based setup screen for the invention.
Fig. 5 is a diagrammatic view of a cradle that can be used with the invention.
Fig. 6 is a block diagram of a incorporating the present invention.

Although in the following description, the present invention will be described incorporated into a digital camera, it will be understood that the invention is also applicable to other hand held or portable digital information/imaging systems such as cell phones, personal digital assistants, portable computers and the like.

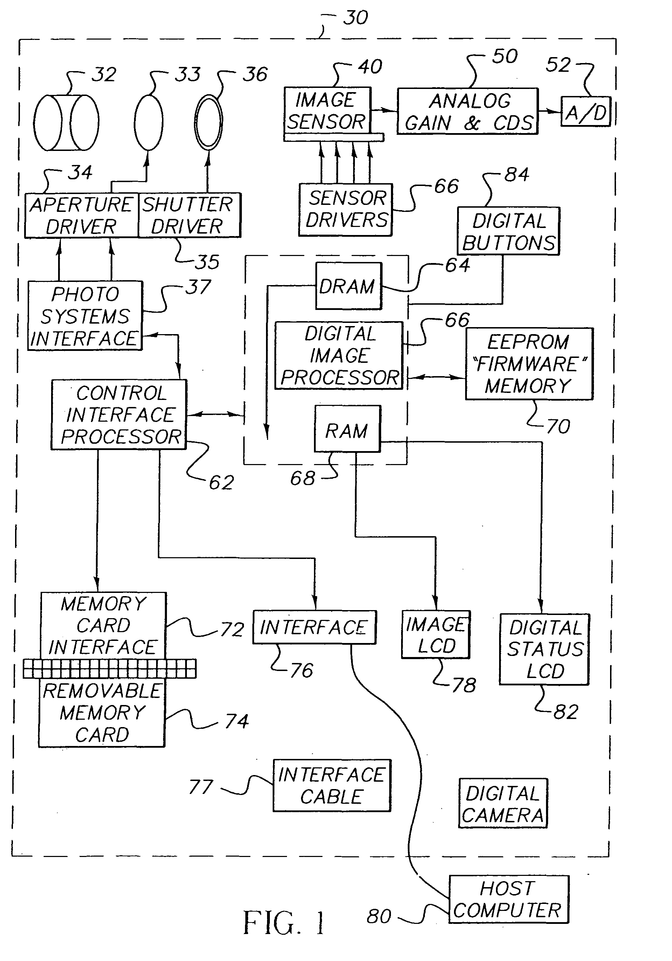

Fig. 1 is a block diagram of an exemplary digital camera which incorporates the present invention. The digital camera **30** produces digital images that are stored on the removable memory card **74.** The digital camera **30** includes a lens **32**, an electrically adjustable aperture **33** driven by aperture motor drive **34** and an electrically driven mechanical shutter **36** driven by shutter motor drive **35**. The lens **32** focuses light from a scene (not shown) on an image sensor **40**, for example, a single-chip color CCD image sensor, suing the well known Bayer color filter pattern. The image sensor **40** are controlled by sensor driver **42**. The aperture motor **34** and shutter motor **35** and the sensor driver **42** are controlled by control signals supplied by a control interface processor **62** and photo systems interface **37**.

The control interface processor **62** receives inputs from the Photo Systems Interface **37**. The analog output signal from the image sensor **40** is amplified and converted to digital data by the analog signal processing (ASP) **50** and analog-to-digital (A/D) converter circuit **52.** The digital data is stored in a DRAM buffer memory **64** and subsequently processed by a digital image processor **66** controlled by the firmware stored in the firmware memory **70**, which can be flash EPROM memory. Alternatively, the digital image processor **66** can be provided by custom circuitry (e.g., by one or more custom integrated circuits [ICs] design only for use in digital cameras), or by a combination of programmable processor(s) and custom circuits.

The processed digital image file is provided to a memory card interface **72** which stores the digital image file on the removable memory card **74**. Removable memory cards **74** are known to those skilled in the art. For example, the removable memory card **74** can include memory cards adapted to the PCMCIA card interface standard, as described in the PC Card Standard, Release 2.0, published by the Personal Computer Memory Card International Association (PCMCIA), Sunnyvale, California, September 1991, or to the *CompactFlash Specification Version 1.3,* published by the CompactFlash Association, Palo Alto, California, August 5, 1998. Other types of removable memory cards, including Smart Memory cards, Secure Digital (SD) cards, and Memory Stick cards, or other types of digital memory devices, such as magnetic hard drives, magnetic tape, or optical disks, could alternatively be used to store the digital images.

In some embodiments, the digital image processor **66** performs color interpolation followed by color and tone correction, in order to produce rendered sRGB image data. The rendered sRGB image data is then JPEG compressed and stored as a JPEG image file on the removable memory card **74.** In other embodiments, the processor directly compressed data on the removable memory card **74**, and the image is later "finished" by processing the compressed Bayer color image data using the host PC **80**. The processor **66** also creates a "thumbnail" size image that is stored in RAM memory **68** and supplied to the color image LCD **78**, which displays the captured image for the user to review. A digital status dot matrix LCD **82** is also provided. The graphical user interface displayed on the color LCD image display **78** and on the digital status LCD **82** is controlled by the user interface portion of the firmware stored in the firmware memory **70** and by digital buttons **84-100.** A third display (not shown) can be provided on the top of the camera **30** to show camera body settings such as aperture, shutter speed, exposure mode, etc.

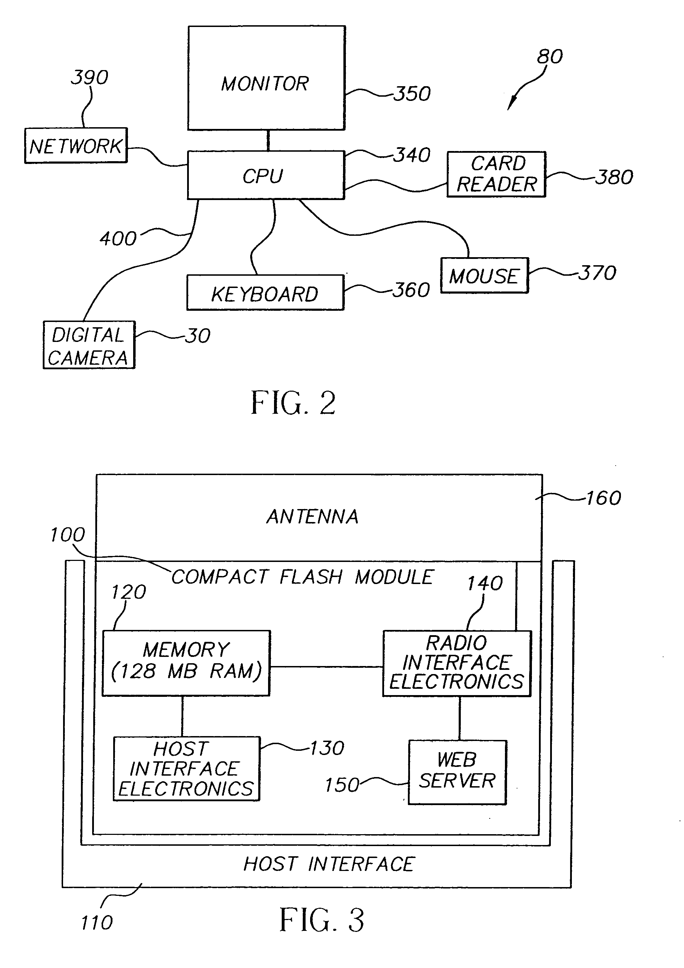

After a series of images have been taken and stored on the removable memory card **74**, the removable memory card **74** can be inserted into a card reader (not shown) in host PC **80** (Fig. 2). Alternatively, an interface cable **77** can be used to connect between the interface **76** in the digital camera **30** and the host PC **80**. The interface cable **77** can conform to, for example, that well known IEEE 1394 interface specification, the universal serial bus (USB) interface specification, or other wired or wireless interface specifications.

According to the invention there is provided a new configuration of flash storage and wireless networking that provides a simple interface to data. Conventional Compact Flash memory needs to be removed from a camera to provide access to the images on a computer, see Fig. 1. The camera can also be plugged into a computer for access but then the camera is not available, see Fig. 2. As shown in Fig. 2, computer **80** includes a CPU **340**, display monitor **350**, keyboard **360**, mouse **370**, a memory card reader **380**, and network interface **390**. Digital camera **30** can be directly connected to CPU **340** by connector **400** (USB, firewire, etc.).

The present invention describes a memory device for a digital camera or PDA type device (or any other digital device) that also can be seen on a wireless network. The concept is to use such a device as a way to access images in a digital camera via a wireless network. The interface could be via a Compact Flash Card, Secure Digital/Multimedia Card or any other common camera storage device. Figure 3, for example shows a block diagram of a Compact Flash Card according to the invention with these capabilities. As shown, wireless memory module (memory card) **100** interfaces with other digital devices via host interface **110**. Module (card) **100** includes a digital memory storage system **120** (e.g., 128 MBRAM), host interface electronics **130**, radio (wireless) interface electronics **140**, web server **150** and antenna **160**.

To the digital camera, or other host digital device, the card **100** would look like a standard storage card. Images could be written to the card in a standard manner. The host digital device would be unaware of the networking capabilities of the card **100** thus simplifying the firmware of the host device. The storage **120** on the card **100** would also be available on the network via a file sharing protocol or via ftp. (ISCSI is an example of a protocol for storage over an IP-based network). The card **100** would be configured via a special configuration file written to the card or via the network using a browser like Internet Explorer or Netscape Navigator. The card **100** would run a simple web server **150** that contained the configuration parameters or the host device. This would be similar to how a printer or other network device can be configured via a browser. The card **100** could also be configured to be available as storage on the network using these methods. Data (e.g., digital images) written to the card **100** would then be available to any wireless network device such as a computer independently of the digital host device.

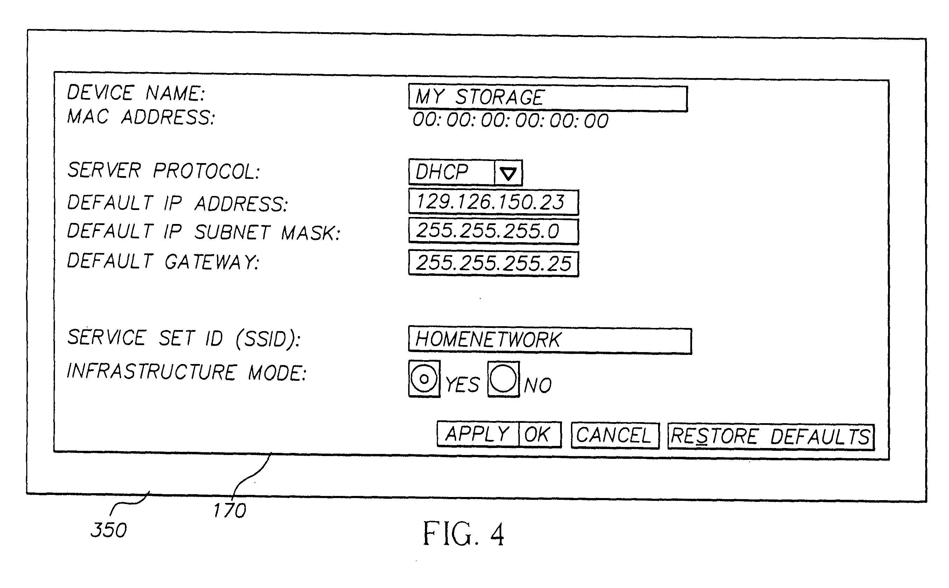

Fig. 4 shows an example of how the web page **170** to configure the device might look on a computer monitor **350**.

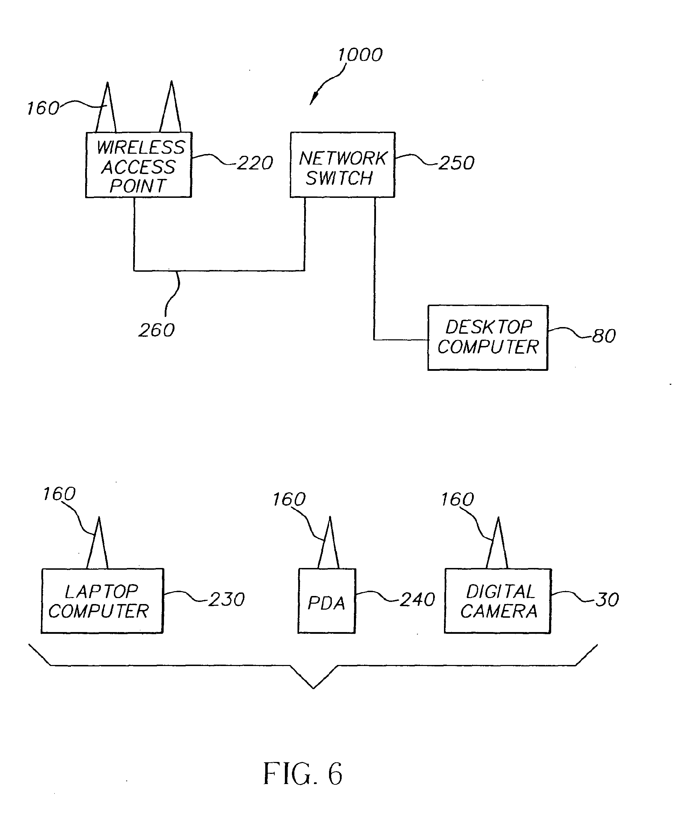

Fig. 6 shows a typical wireless network **1000** where the wireless storage card of the invention would look like another node on the network. As shown, network **1000** includes access points **220**, with radio antennas **160**, connected via a standard network switch **250**. Computers **80** can also be connected by cable or wire to switch **250**. Laptop computer **230**, PDA **240** and digital camera **30** can access the network via the wireless network through antennas **160**. Data can be copied from and to the storage device **120** of card **100** just like any other network accessible storage.

The card **100** can connect to the network via an Access Point **220** or in an Ad Hoc manner directly to a device like a computer **80, 230**.

The network **1000** can be 802.11a, 802.11b, Bluetooth, or any other wireless protocol. The card can even have a wired network or USB interface. In the case of the USB interface the device would have a wired USB interface that would connect to a host, in the same manner as a card reader, as well as plug into the camera as a storage device. In this case the card would need to be multi-ported (i.e., have more than one card slots) so that the digital camera 30 could access the memory **120** as well as the host at the same time.

The card **100** can also include capability such as automatic emailing of images or copying files to another location. This functionality would be programmable via a configuration file or via the web browser interface **150**.

Additional capabilities could be provided in the configuration for security and other required setup parameters.

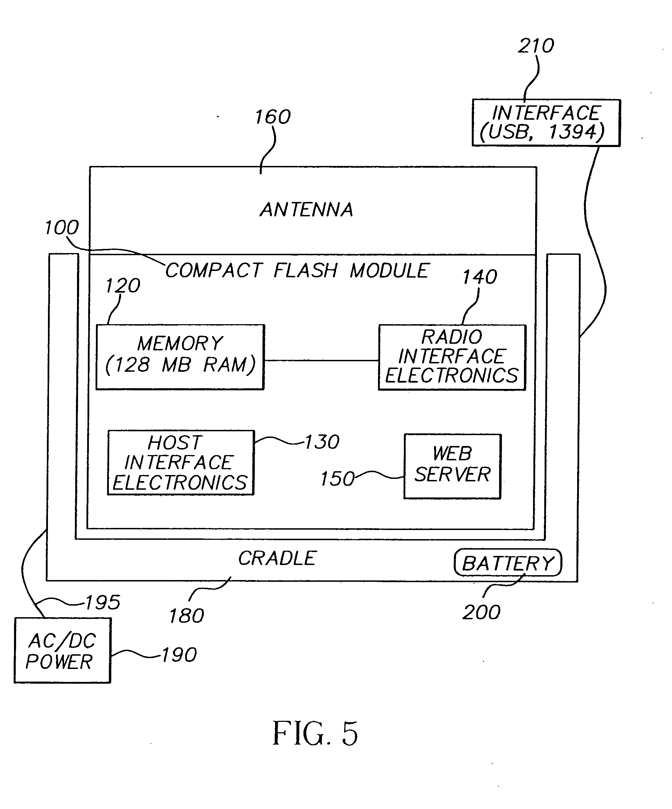

As shown in Fig. 5, the Wireless Storage module (card) **100** can also be made available when not in a digital device (such as digital camera **30**) by using a cradle **180** that contains either a battery **200** or a connector **195** for external power via a DC power source like a standard AC to DC converter **190**. This cradle **180** can also provide a communications interface **210** to a computer via a connection such as USB. The device would then appear to the computer as a standard USB storage device but would also be available via the wireless network.

## Claims

1. A removable wireless storage module comprising:
a digital memory for storing digital data;
a radio antenna;
radio interface electronics coupled to said antenna and said digital memory;
a web server; and
host interface electronics for coupling said digital memory to a digital host device which can supply electrical power to said module and which can produce digital data which can be stored in said digital memory;
wherein said digital memory is also accessible by radio wireless device independently of said digital host device, by means of said radio antenna and said radio interface electronics.

2. The module of claim 1 further including a cradle for receiving said module, said cradle including a source of electrical power which can be coupled to a received module to supply electrical power to said module.

3. The module of claim 1 wherein said source of electrical power of said cradle includes one or more of a battery, and in AC to DC converter connectable to an AC electrical power source.

4. The module of claim 1 wherein said cradle includes a communications interface which can connect said module to a computer.

5. The module of claim 1 wherein said digital memory is accessible by one or more of a portable computer, a digital camera, a PDA, a stationary computer coupled to a wireless access port.

6. A digital camera system comprising:
a digital camera for producing digital images, said digital camera being adapted to receive a removable wireless storage module; and
a removable wireless storage module for receipt by said digital camera, said module including:
a digital memory for storing digital data, digital host camera interface electronics for coupling said digital memory to said digital camera so that digital data, including digital images, can be stored in said digital memory; and
a wireless internet system coupled to said digital memory for effecting access to said digital memory by a network wireless device independently of said digital camera.

7. The system of claim 6 wherein said wireless internet system includes a radio antenna, radio interface electronics coupled to said antenna and said digital memory and a web server.
